Europäisches Patentamt

European Patent Office

Office européen des brevets

(11) Veröffentlichungsnummer: **0 254 187**

**A2**

(12) **EUROPÄISCHE PATENTANMELDUNG**

(21) Anmeldenummer: 87110164.8

(22) Anmeldetag: 14.07.87

(51) Int. Cl.⁴: **C09D 11/00**

(30) Priorität: 21.07.86 DE 3624587

(43) Veröffentlichungstag der Anmeldung:
27.01.88 Patentblatt 88/04

(84) Benannte Vertragsstaaten:
CH DE ES FR GB IT LI NL SE

(71) Anmelder: **Siemens Aktiengesellschaft Berlin und München**
**Wittelsbacherplatz 2**
**D-8000 München 2(DE)**

Anmelder: **MICHAEL HUBER MÜNCHEN GMBH**
**Feldkirchener Strasse 15**
**D-8011 Kirchheim-Heimstetten(DE)**

(72) Erfinder: **Melnitzki, Arthur**
**Münchbergstrasse 7a**
**D-8000 München 90(DE)**
Erfinder: **Grossmann, Alexander, Dipl.-Ing. FH**
**Gebelestrasse 22**
**D-8000 München 80(DE)**

(74) Vertreter: **Mehl, Ernst, Dipl.-Ing. et al**
**Postfach 22 01 76**
**D-8000 München 22(DE)**

(54) **Pigmentierter Lack für Schreibsysteme.**

(57) Zur Beschriftung von dunklem Untergrund von Kunststoff-bzw. Metalloberflächen dient ein pigmentierter, vorzugsweise weißer Lack, der in Ink-Jet-Schreibsystemen verarbeitbar ist. Damit sich die Pigmente im Schreibkopf oder im Vorratsbehälter innerhalb einer begrenzten Einsatzdauer (zum Beispiel eine Woche) nicht festsetzen, sind spezielle oberflächenbehandelte Weißpigmente, zum Beispiel Rutil, mit einem Dispergier-und Antiabsetzmittel versehen. Diesem Gemisch sind ferner radikalisch polymerisierbare Monomere zugesetzt und als Lösungsmittel Glykole oder Derivate und oberflächenaktive Substanzen beigegeben.

## Pigmentierter Lack für Schreibsysteme.

Die Erfindung betrifft pigmentierten, hellen, vorzugsweise weißen Lack für Schreibsysteme, insbesondere Ink Jet-Schreibsysteme, zur Beschriftung auf dunklem Untergrund zum Beispiel in Form von Kunststoff-bzw. Metalloberflächen.

Das der Erfindung zugrundeliegende Problem besteht in der Hauptsache darin, eine genügende Menge Farbpigmente in einer Flüssigkeit so zu suspendieren, daß sich die Pigmente weder im Schreibkopf noch im Vorratsbehälter über eine Einsatzdauer von zum Beispiel einer Woche absetzen. Zur Erreichung einer ausreichenden Deckkraft müssen ca. 5 .. 20 % Massenanteil Pigmente suspendiert werden.

Das Problem ist bisher ungelöst, da auch - schon bei kurzer Nichtbenutzung des Schreibsystems sich bei der Verwendung bekannter Lacke die Pigmente absetzen und die Düsen verstopfen. Auch bei der Verwendung von heller Farbe, zum Beispiel gelb als Mischung von Weißpigment und einem gelben, organischen Farbpigment, konnte nicht verhindert werden, daß sich die Pigmente bereits nach kurzer Zeit im Schreibkopf und im Vorratsbehälter absetzten.

Der Erfindung liegt die Aufgabe zugrunde, den eingangs erwähnten pigmentierten Lack herzustellen. Dieser Lack soll auf nahezu allen Kunststoffoberflächen, wie zum Beispiel Polyester, Polyimid, Polyethylen, Polystyrol, Polysulfon, ABS, PVC, gut haften und innerhalb von 30 bis 60 Sekunden bei Raumtemperatur trocknen. Das gleiche gilt für metallische Oberflächen.

Die der Erfindung zugrundeliegende Aufgabe wird gemäß den kennzeichnenden Merkmalen der Patentansprüche gelöst. Unter oberflächenbehandelten Titandioxid versteht man eine spezielle Behandlung mit siliziumorganischen Verbindungen.

Das oberflächenbehandelte Titandioxid-Pigment wird in einer Korngröße von zum Beispiel <5 $\mu$m verwendet. Als Dispergier-und Antiabsetzmittel eignen sich zum Beispiel modifiziertes Riciniusöl und sogenannte pyrogene Kieselsäure in einem Konzentrationsbereich von 0 ... 5 %.

Um die Haftung auf der Oberfläche zu gewährleisten, werden radikalisch polymerisierbare Monomere wie Acrylate, Styrol, Divinylbenzol, Vinylacetat in einer Konzentration von 1 ... 15 % zugesetzt.

Zur Einstellung der Oberflächenspannung und der Viskosität werden als Lösungsmittel Glykole, zum Beispiel Ethyl-, Butylglykol oder deren Derivate, zum Beispiel Ethylglykolacetat, zugemischt. Ihr Anteil liegt zwischen 45 .. 90 %. Weiterhin kommen in Frage Alkohole von Ethanol bis Hexanol. Als oberflächenaktive Substanzen eignen sich zum Beispiel Titansäureester in einem Bereich von 0 ... 0,5 %.

Der Lack nach der Erfindung erfüllt folgende Abnahmewerte:

Viskosität: 24 ± 1 s im Auslaufbecher 3 mm in Anlehnung an DIN 53211,
Oberflächenspannung: 29 ± 0,5 m N/m.

Mit dem Lack nach der Erfindung werden folgende Eigenschaften erreicht: Die Beschriftung ist beständig gegen Kratzen mit dem Fingernagel. Die Beschriftung von Kabeln ist zum Beispiel auf PVC in Gegenwart von Öl, Benzin, 10 %ig Waschmittellösung bei einer Belastung von 500 gr abriebbeständig.

Ausführungsbeispiel:

Der Lack besteht aus folgenden Komponenten (Massenanteil):

5 ... 20 $TiO_2$ (Rutil), oberflächenbehandelt
1 ... 15 lösliches Acrylat

0 ... 5 Dispergier-und Antiabsetzmittel
45 ... 90 Glykole und deren Derivate
0 ... 5 Oberflächenaktive Substanzen

**Ansprüche**

1. Pigmentierter heller, vorzugsweise weißer Lack für Schreibsysteme, insbesondere Ink-Jet-Schreibsysteme, zur Beschriftung auf dunklem Untergrund, zum Beispiel auf Kunststoff-bzw. Metalloberflächen, **dadurch gekennzeichnet,** daß oberflächenbehandelte Farbpigmente (vorzugsweise weiße Farbpigmente) mit einem Dispergier-und Antiabsetzmittel versehen werden, radikalisch polymerisierbare Monomere zugesetzt und als Lösungsmittel Glykole oder deren Derivate und oberflächenaktive Substanzen zusammengemischt werden.

2. Lack nach Anspruch 1, **dadurch gekennzeichnet,** daß als oberflächenbehandelte Weißpigmente zum Beispiel Titandioxid (Rutil), Magnesiumoxid oder Bariumsulfat in einer Korngröße < 5 $\mu$m verwendet werden.

3. Lack nach Anspruch 1, **dadurch gekennzeichnet,** daß als Dispergier-und Antiabsetzmittel zum Beispiel modifiziertes Rizinusöl und oder pyrogene Kieselsäure verwendet werden.

4. Lack nach Anspruch 1, **dadurch gekennzeichnet,** daß als radikalisch polymerisierbare Monomere Acrylate, Styrol, Divinylbenzol, oder Vinylazetat zugesetzt werden.

5. Lack nach Anspruch 1, **dadurch gekennzeichnet,** daß als Lösungsmittel zum Beispiel Äthyl-, Butylglykol oder Ethylglykolazetat bzw. Alkohole von Ethanol bis Hexanol zugemischt wird.

6. Lack nach Anspruch 1, **dadurch gekennzeichnet,** daß als oberflächenaktive Substanzen zum Beispiel Titansäureester verwendet wird.

7. Lack nach Anspruch 1, **dadurch gekennzeichnet,** daß die einzelnen Komponenten in folgenden Massenanteilen zusammengemischt werden:

5 ... 20 $TiO_2$ Rutil, oberflächenbehandelt
1 ... 15 lösliches Acrylat
0 ... 5 Dispergier-und Antiabsetzmittel
45 ... 90 Glykole und deren Derivate
0 ... 5 oberflächenaktive Substanzen.